# EUROPÄISCHE PATENTSCHRIFT

(11) **EP 3 649 655 B1**
(45) Veröffentlichungstag und Bekanntmachung des Hinweises auf die Patenterteilung: **03.11.2021**
(21) Anmeldenummer: 18734200.1
(22) Anmeldetag: 25.06.2018
(51) Int. Cl.: H01F 3/10, H01F 27/255, H01F 37/00, H02M 3/00

(54) **SPEICHERDROSSEL**
STORAGE CHOKE
BOBINE D'ACCUMULATION

(30) Priorität: 04.07.2017 DE 102017114900
(43) Veröffentlichungstag der Anmeldung: 13.05.2020
(73) Patentinhaber: TDK Electronics AG, 81671 München (DE); Bayerische Motoren Werke Aktiengesellschaft, 80809 München (DE)
(72) Erfinder: BECK, Fabian, 4522 Rüttenen (CH); BOEHM, Florian, 89077 Ulm (DE); KOEPPEN, Matthias, 89518 Heidenheim (DE); RAIMANN, Manuel, 80337 München (DE)
(74) Vertreter: Epping - Hermann - Fischer
(86) Internationale Anmeldenummer: PCT/EP2018/066949
(87) Internationale Veröffentlichungsnummer: WO 2019/007738

(56) Entgegenhaltungen:
- EP-A1- 2 453 450
- DE-A1-102014 206 469
- DE-A1-102016 201 258
- DE-T5-112013 006 277
- US-A1- 2016 300 657

## Beschreibung

Die vorliegende Erfindung betrifft eine Speicherdrossel für einen mehrphasigen Gleichspannungswandler.

EP 2 453 450 A1, DE 11 2013 006 277 T5, DE 10 2014 206 469 A1 und US 2016/0300657 A1 offenbaren eine Speicherdrossel, geeignet für einen mehrphasigen Gleichspannungswandler, aufweisend zumindest zwei Spulen und einen Kern, über den die Spulen miteinander gekoppelt sind, wobei der Kern einen ersten Bereich, der ein erstes Material aufweist, und einen zweiten Bereich aufweist, der ein zweites Material aufweist, das vom ersten Material verschieden ist, wobei das erste Material und das zweite Material magnetisch sind.

Die vorliegende Erfindung löst die Aufgabe, eine vorteilhafte Speicherdrossel anzugeben. Beispielsweise könnten eine Common Mode Induktivität und eine Differential Mode Induktivität der Speicherdrossel derart ausgestaltet sein, dass die Speicherdrossel für den Einsatz in einem mehrphasigen Gleichspannungswandler geeignet sind.

Diese Aufgabe wird durch eine Speicherdrossel gemäß Anspruch 1 gelöst.

Erfindungsgemäss wird daher eine Speicherdrossel für einen mehrphasigen Gleichspannungswandler vorgeschlagen, mit den Merkmalen von Anspruch 1.

Durch die Verwendung eines Kerns, der zwei voneinander verschiedene Materialien aufweist, wird es ermöglicht, den Kern derart auszugestalten, dass er eine gewünschte Common Mode Induktivität und eine gewünschte Differential Mode Induktivität aufweist. Dementsprechend kann die Verwendung eines Kerns, der zwei voneinander verschiedene Materialien aufweist, eine hohe Designfreiheit ermöglichen, die es erlaubt, die Common Mode Induktivität und die Differential Mode Induktivität der Speicherdrossel zu optimieren. Insbesondere können nunmehr die Common Mode Induktivität und die Differential Mode Induktivität separat voneinander optimiert werden.

Für die Common Mode Induktivität ist ein magnetischer Fluss wesentlich, der einen hohen Gleichstromanteil und nur einen geringen Wechselstromanteil aufweist. Wird die Speicherdrossel in einem Gleichspannungswandler eingesetzt, so ist dieser magnetische Fluss für den größten Teil des magnetischen Gesamtflusses verantwortlich. Daher sollte ein Material mit einer hohen Sättigungsflussdichte gewählt werden.

Für die Differential Mode Induktivität ist ein magnetischer Fluss wesentlich, der einen hohen Wechselstromanteil aufweist. Ein Strom, der durch den für die Differential Mode Induktivität wesentlichen Fluss entsteht, zirkuliert im Eingang der Speicherdrossel und führt lediglich zu Blindleistung. Ein Differential Mode Fluss entsteht durch die Ansteuerung benachbarter Spulen mit Phasenverschiebung. Der Differential Mode Fluss enthält jedoch idealerweise keinen Gleichstromanteil. Daher kann ein Material mit geringerer Sättigungsflussdichte jedoch höherer Permeabilität gewählt werden. Hierdurch kann erreicht werden, dass der Differential Mode Stromripple so gering wie möglich wird. Dementsprechend ist die Blindleistung gering.

Das erste Material kann derart ausgestaltet und angeordnet sein, dass eine gewisse Common Mode Induktivität der Speicherdrossel erreicht wird. Das zweite Material kann derart ausgestaltet und angeordnet sein, dass eine gewisse Differential Mode Induktivität der Speicherdrossel erreicht wird.

Das erste Material kann eine höhere Sättigungsmagnetisierung aufweisen als das zweite Material. Eine Sättigungsmagnetisierung gibt einen materialspezifischen Höchstwert der Magnetisierung an, der auch durch eine Erhöhung der äußeren magnetischen Feldstärke nicht überschritten werden kann. Für das erste Material kann eine magnetische Sättigung erst bei magnetischen Flussdichten von mehr als 1 T eintreten.

Der Kern kann vorzugsweise derart auszugestalten sein, dass ein für die Common Mode Induktivität bestimmender Pfad ausschließlich durch das erste Material verläuft. Das erste Material kann auf Grund seiner hohen Sättigungsmagnetisierung einen ausreichend hohen magnetischen Fluss entlang des für die Common Mode Induktivität bestimmenden Pfads ermöglichen.

Das erste Material kann eine geringere magnetische Permeabilität aufweisen als das zweite Material. Die magnetische Permeabilität gibt die Durchlässigkeit eines Materials für magnetische Felder an. Ein Differential-Mode-Pfad, entlang dem der magnetische Fluss verläuft, der für die Differential Mode Induktivität wesentlich ist, kann dadurch optimiert werden, dass das zweite Material eine höhere magnetische Permeabilität als das erste Material und eine geringere Sättigungsmagnetisierung als das erste Material aufweist. Im zweiten Bereich kann der magnetische Fluss eine Stärke aufweisen, bei der die Verwendung des zweiten Materials mit einer hohen magnetischen Permeabilität angebracht ist. Der Differential Mode Fluss, der im zweiten Bereich des Kerns vorliegt, enthält idealerweise keinen DC Anteil, daher ist die Gesamtflussdichte im zweiten Bereich niedriger. Auf Grund der höheren magnetischen Permeabilität des zweiten Materials kann sich für die Differential Mode Induktivität ein hoher Wert ergeben.

Der erste Bereich weist stabförmige Kerne und innere Platten auf. Jede der Spulen ist um einen entsprechenden der stabförmigen Kerne gewickelt, wobei die stabförmigen Kerne an den inneren Platten anliegen. Insbesondere kann der erste Bereich zwei innere Platten aufweisen, wobei die stabförmigen Kerne zwischen den inneren Platten angeordnet sind. Dabei sind die stabförmigen Kerne und die inneren Platten wesentlich zur Bestimmung der Common Mode Induktivität. Die stabförmigen Kerne können eine Symmetrieachse aufweisen und derart angeordnet sein, dass die Symmetrieachse senkrecht auf den inneren Platten steht. Die Spulen können die Symmetrieachsen der stabförmigen Kerne umschließen.

Der zweite Bereich weist äußere Platten auf, die auf der von den stabförmigen Kernen wegweisenden Seite der inneren Platten angeordnet sind und die parallel zu den inneren Platten angeordnet sind. Insbesondere kann der zweite Bereich zwei äußere Platten aufweisen, die jeweils parallel zu einer inneren Platte angeordnet sind und auf der jeweils von den stabförmigen Kernen wegweisenden Seite der inneren Platten angeordnet sind. Der erste Bereich kann dabei zwischen den beiden äußeren Platten angeordnet sein.

Die inneren Platten und die äußeren Platten können durch einen Spalt voneinander getrennt sein.

Der erste Bereich kann zumindest einen Kernteil aufweisen, der derart zwischen zwei Spulen angeordnet ist, dass eine erste Seitenfläche des zumindest einen Kernteils zu einer der beiden Spulen weist und eine zweite Seitenfläche des zumindest einen Kernteils zu einer anderen der beiden Spulen weist. Der zumindest eine Kernteil ist dabei dazu ausgestaltet, von der Spule erzeugte Magnetfelder zu führen.

Der zumindest eine Kernteil kann einen dreieckigen Querschnitt aufweisen. Dreieckige Querschnitte sind besonders vorteilhaft, da diese recht gut an die runde Form der Spulen angepasst sind und über einen großen Bereich nahe an der Spule angeordnet werden können.

Der erste Bereich kann mehrere derartige Kernteile aufweisen, wobei zwischen den Kernteilen jeweils eine Öffnung angeordnet ist. Dementsprechend berühren sich die einzelnen Kernteile nicht. Über die Öffnung kann ein Kühlsystem in einfacher Weise auf die Spulen zugreifen. Die Kernteile, die zur Führung der Magnetfelder beitragen können, können dementsprechend derart ausgestaltet sein, dass sie einer Kühlung der Spulen nicht im Wege stehen.

Bei dem ersten Material kann es sich um ein gepresstes Pulver, insbesondere um einen gepressten Eisenpulverkern, handeln. Bei dem zweiten Material kann es sich um ein gesintertes Material handeln. Es kann sich beispielsweise um ein Mangan-Zink-Ferrit handeln. Diese Materialien weisen die oben beschriebenen vorteilhaften Eigenschaften auf. Es ist jedoch auch die Verwendung anderer Materialien für das erste Material und/oder das zweite Material möglich.

Gemäß einem weiteren Aspekt betrifft die vorliegende Erfindung einen mehrphasigen Gleichspannungswandler, der die oben beschriebene Speicherdrossel aufweist. Im Folgenden wird die vorliegende Erfindung anhand der Figuren näher beschrieben.
Figur 1 zeigt eine erfindungsgemässe Speicherdrossel in einer perspektivischen Ansicht.
Figur 2 zeigt einen Querschnitt durch die Speicherdrossel.
Figur 3 zeigt eine Simulation des magnetischen Flusses in einem Kern der Speicherdrossel.
Figur 4 zeigt die in Figur 3 gezeigte Simulation mit einer anderen Skala.
Figur 5 zeigt ein Schaltbild für einen Gleichspannungswandler, der die Speicherdrossel aufweist.

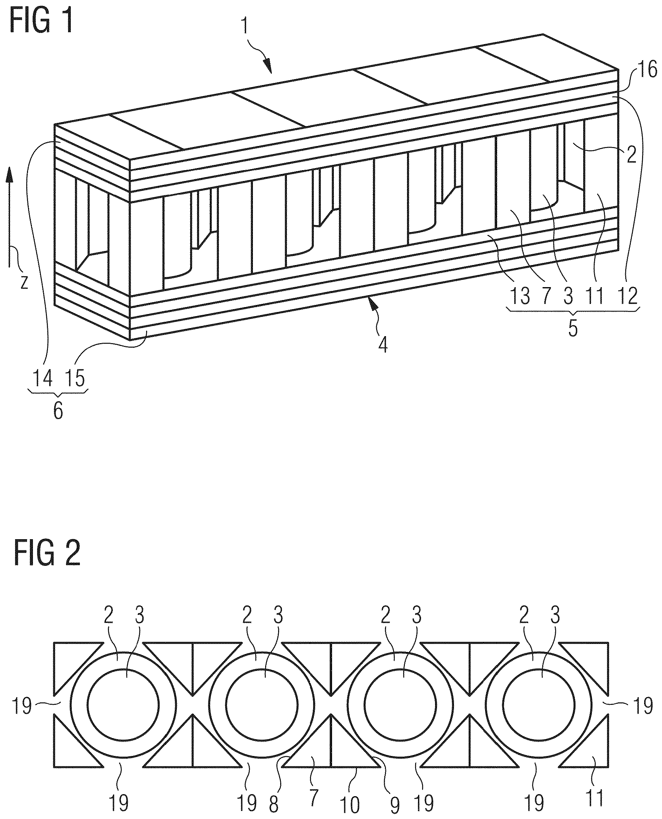

Figur 1 zeigt eine erfindungsgemässe Speicherdrossel 1 für einen mehrphasigen Gleichspannungswandler in einer perspektivischen Ansicht. Die Speicherdrossel 1 weist mehrere Spulen 2 auf. Insbesondere weist die Speicherdrossel 1 vier Spulen 2 auf. Jede der Spulen 2 wird durch eine Wicklung eines Kupferdrahts gebildet. Die Wicklungen sind jeweils um einen stabförmigen Kern 3 gewickelt. Eine Achse der stabförmigen Kerne 3 definiert eine z-Richtung. Die stabförmigen Kerne 3 können insbesondere zylinderförmig sein.

Ferner weist die Speicherdrossel 1 einen Kern 4 auf, über den die Spulen 2 magnetisch miteinander gekoppelt sind. Der Kern 4 weist einen ersten Bereich 5, der ein erstes Material aufweist, und einen zweiten Bereich 6 auf, der ein zweites von dem ersten Material verschiedenes Material aufweist.

Figur 2 zeigt einen Querschnitt durch die Speicherdrossel 1. Es ist ein Querschnitt durch eine Ebene gezeigt, die senkrecht zu den Achsen der stabförmigen Kerne 3 steht, d.h. durch eine Ebene, die senkrecht zu der z-Richtung steht.

Der erste Bereich 5 des Kerns 4 weist die oben genannten stabförmigen Kerne 3 auf. Jede der Spulen 2 ist um einen der stabförmigen Kerne 3 gewickelt. Dabei liegen die Kupferwicklungen unmittelbar an dem jeweiligen stabförmigen Kern 3 an.

Der erste Bereich 5 weist ferner Kernteile 7 auf, die jeweils zwischen zwei Spulen 2 angeordnet sind. Jeder dieser Kernteile 7 weist eine erste Seitenfläche 8 auf, die zu einer Spule 2 weist und eine zweite Seitenfläche 9, die zu einer anderen Spule 2 weist. Die Kernteile 7 haben dabei in einem Querschnitt senkrecht zur z-Richtung eine dreieckige Form. Zwischen der jeweiligen Spule 2 und der ersten Seitenfläche 8 beziehungsweise der zweiten Seitenfläche 9 verbleibt ein Spalt, sodass sich die Spule 2 und die Seitenflächen 8, 9 nicht berühren. Ferner weisen die Kernteile 7 jeweils eine dritte Seitenfläche 10 auf, die von den Spulen 2 weg weist.

Darüber hinaus weist der erste Bereich 5 äußere Kernteile 11 auf, die nur eine einzige Seitenfläche aufweisen, die zu einer Spule 2 weist. Auch die äußeren Kernteile 11 haben in einem Querschnitt senkrecht zur z-Richtung eine dreieckige Form. Die äußeren Kernteile 11 weisen die Form eines in z-Richtung halbierten Kernteils 7 auf.

Der erste Bereich 5 weist ferner eine erste innere Platte 12 auf. Die erste innere Platte 12 schließt sich in z-Richtung an die stabförmigen Kerne 3 und die Kernteile 7, 11 des ersten Bereichs 5 an. Insbesondere liegen die stabförmigen Kerne 3 und die Kernteile 7, 11 unmittelbar an der ersten inneren Platte 12 an. Zwischen der ersten inneren Platte 12 und den Enden der stabförmigen Kerne 3 und der Kernteile 7, 11 ist kein Spalt angeordnet.

Darüber hinaus weist der erste Bereich 5 ferner eine zweite innere Platte 12 auf, die auf der Seite der stabförmigen Kerne 3 und der Kernteile 7, 11 angeordnet ist, die von der ersten inneren Platte 12 weg weist. Die zweite innere Platte 13 hat eine analoge Funktion und den gleichen Aufbau wie die erste innere Platte 12.

Die inneren Platten 12, 13, die stabförmigen Kerne 3 und die Kernteile 7, 11 mit dreieckigem Querschnitt bestehen jeweils aus einem ersten Material. Bei dem ersten Material kann es sich beispielsweise um gepresste Eisenpulverkerne handeln. Das erste Material weist eine hohe Sättigungsmagnetisierung auf. Beispielsweise kann das erste Material erst bei magnetischen Flussdichten von mehr als 1 T eine magnetische Sättigung zeigen. Das erste Material weist ferner eine geringe magnetische Permeabilität auf.

Ferner weist der Kern 4 den zweiten Bereich 6 auf, der ein zweites Material aufweist. Der zweite Bereich 6 weist eine erste äußere Platte 14 und eine zweite äußere Platte 15 auf. Die erste äußere Platte 14 ist auf der Seite der ersten inneren Platte 12 angeordnet, die von den stabförmigen Kernen 3 weg weist. Die erste äußere Platte 14 ist parallel zu der ersten inneren Platte 12 angeordnet. Die zweite äußere Platte 15 ist auf der Seite der zweiten inneren Platte 13 angeordnet, die von den stabförmigen Kernen 3 weg weist. Die zweite äußere Platte 15 ist parallel zu der zweiten inneren Platte 13 angeordnet. Die zweite äußere Platte 15 weist den gleichen Aufbau und die gleiche Funktion wie die erste äußere Platte 14 auf.

Der zweite Bereich 6 besteht aus dem zweiten Material. Bei dem zweiten Material handelt es sich um ein gesintertes Material, vorzugsweise um ein Mangan-Zink-Ferrit (MnZn-Ferrit).

Zwischen den inneren Platten 12, 13 und den äußeren Platten 14, 15 ist jeweils ein Spalt 16 angeordnet. Der Spalt 16 kann mit Luft gefüllt sein.

Im Folgenden wird erläutert, dass die in den Figuren 1 und 2 gezeigte Speicherdrossel 1 dazu ausgestaltet ist, eine Common Mode Induktivität und eine Differential Mode Induktivität dahingehend zu optimieren, dass der Gesamtstromripple möglichst gering wird, um die Verluste in der Wicklung zu minimieren.

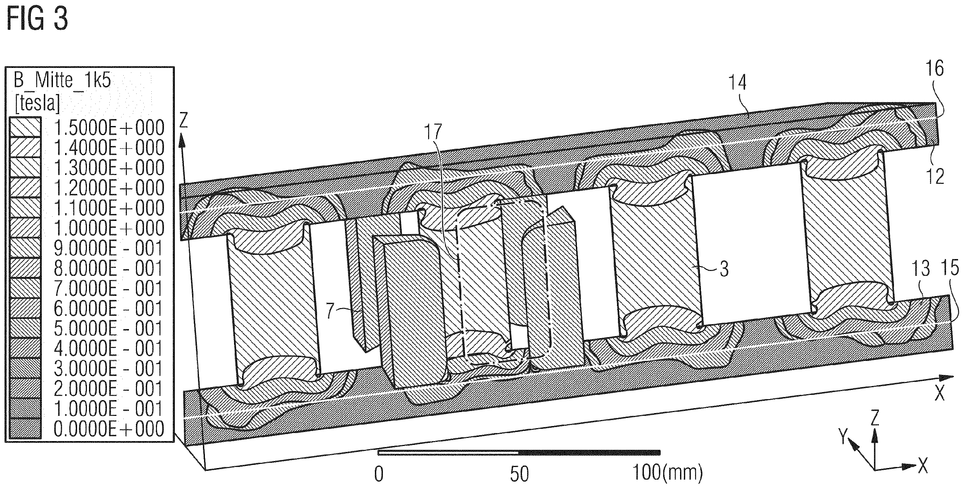

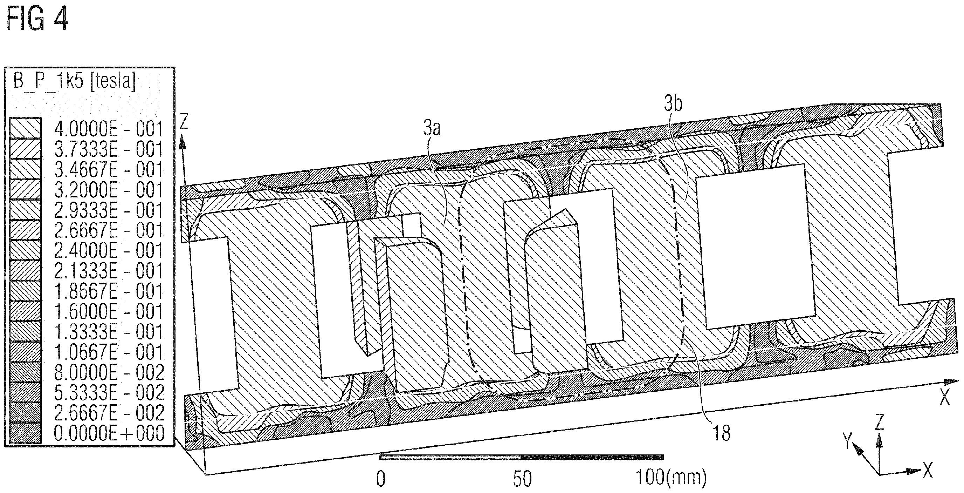

In diesem Zusammenhang wird auch auf die Figuren 3 und 4 verweisen, die jeweils eine Simulation eines magnetischen Flusses in dem Kern 4 zeigen, wenn ein Strom durch die Spulen 2 der Speicherdrossel 1 fließt. In beiden Figuren wird von dem gleichen Strom ausgegangen. Die Darstellung der Figuren 3 und 4 unterscheidet sich in der verwendeten Skala. In Figur 3 ist der magnetische Fluss auf einer Skala zwischen 0 T und 1,5 T aufgetragen. In Figur 4 ist der magnetische Fluss auf einer feiner untergliederten Skala zwischen 0 T und 0,4 T aufgetragen. Zur einfacheren Darstellung sind die Spulen 2 in den Figuren 3 und 4 nicht gezeigt. Außerdem sind nur einige der Kernteile 7 dargestellt. Zudem sind die Kernteile 7 nur teilweise dargestellt.

Die Speicherdrossel 1 weist sowohl eine Common Mode Induktivität als auch eine Differential Mode Induktivität auf. Die Common Mode Induktivität wird im Wesentlichen durch einen magnetischen Fluss entlang eines Pfads bestimmt, der entlang eines stabförmigen Kerns 3 in z-Richtung verläuft, über die erste innere Platte 12 auf einen Kernteil 7 übergeleitet wird, der eine zu der jeweiligen Spule 2 weisende Seitenfläche 8 aufweist, über diesen Kernteil 7 in negativer z-Richtung verläuft und über die zweite innere Platte 13 wieder in den gleichen stabförmigen Kern 3 eingekoppelt wird. In Figur 3 ist ein Beispiel für einen solchen Common-Mode-Pfad 17 eingezeichnet. Der für die Common Mode Induktivität wesentliche Fluss weist einen hohen Gleichstromanteil mit einem geringen Wechselstromanteil auf.

Der Common-Mode-Pfad 17 verläuft entlang des ersten Bereichs 5. Somit verläuft der Common-Mode-Pfad 17 ausschließlich in dem ersten Material. Da das erste Material eine hohe magnetische Sättigung aufweist, kann sich entlang des Common-Mode-Pfads ein hoher magnetischer Fluss einstellen. Die Speicherdrossel wird in einem Gleichspannungswandler eingesetzt. Dementsprechend wird sich der größte Teil des magnetischen Flusses entlang des Common-Mode-Pfads einstellen. Dieser Fluss weist einen hohen DC Anteil auf.

Für die Differential Mode Induktivität ist ein magnetischer Fluss wesentlich, der entlang von Differential-Mode-Pfaden 18 verläuft. In Figur 4 ist ein Beispiel für einen Diffential-Mode-Pfad 18 eingezeichnet. Dieser verläuft in z-Richtung entlang eines ersten stabförmigen Kerns 3a, über die erste äußere Platte 14, in negativer z-Richtung durch einen zweiten stabförmigen Kern 3b und entlang der zweiten äußeren Platte 15 zurück zum ersten stabförmigen Kern 3a. Da dieser Pfad 18 über die äußeren Platten 14, 15 verläuft, deren Material eine höhere magnetische Permeabilität aufweist als das Material der inneren Platten 12, 13, ergibt sich für die Differential Mode Induktivität ein hoher Wert. Eine hohe Differential Mode Induktivität ist vorteilhaft, da sie zu einer geringen Blindleistung der Speicherdrossel 1 führt. Ein magnetischer Fluss, der durch die Kopplung entlang der Diffential-Mode-Pfade 18 erfolgt, zirkuliert im Eingang der Speicherdrossel und führt lediglich zu Blindleistung. Daher ist es wünschenswert, diesen Fluss durch die Verwendung eines geeigneten zweiten Materials zu unterdrücken.

Darüber hinaus treten in dem zweiten Material nur geringe Verluste auf. Dementsprechend ermöglicht es die Verwendung zweier voneinander unterschiedlicher Materialien für den Kern 4, die in der Speicherdrossel auftretenden Verluste zu minimieren. Insbesondere ist die Minimierung der Verluste möglich, ohne den entlang des Common-Mode-Pfads 17 entstehenden magnetischen Fluss wesentlich beschränken zu müssen.

Ferner weist der erste Bereich 5 die oben beschriebenen Kernteile 7 mit dreieckigem Querschnitt und die äußeren Kernteile 11 auf. Da diese sich in unmittelbarer Nähe zu den jeweiligen Spulen 2 befinden, können sie für eine gute Führung der von den Spulen 2 erzeugten Magnetfelder sorgen.

Die Ausgestaltung der Kernteile 7 mit einem dreieckigen Querschnitt ermöglicht es, zwischen zwei Kernteilen 7 eine Öffnung 19 anzuordnen. Zwei benachbarte Kernteile 7 berühren sich dementsprechend nicht. Über die Öffnung 19 zwischen den Kernteilen 7 sind die Spulen 2 zugänglich. Auf diese Weise kann es ermöglicht werden, die Spulen 2 zu kühlen. Die Ausgestaltung der Kernteile 7 ermöglicht somit eine Führung der Magnetfelder, ohne dabei eine Kühlung der Speicherdrossel 1 zu behindern. Gleiches gilt auch für die äußeren Kernteile 11. Zwischen einem äußeren Kernteil 11 und dem zu diesem benachbarten Kernteil 7 ist ebenfalls eine Öffnung 19 ausgebildet.

Die Common Mode Induktivität und die Differential Mode Induktivität werden durch die geometrischen Ausmaße des ersten und des zweiten Bereichs 5, 6 des Kerns 4 bestimmt. Beispielsweise können die Common Mode Induktivität und die Differential Mode Induktivität verändert werden, indem die Durchmesser der stabförmigen Kerne 3 und/oder die Dicken der inneren und äußeren Platten 12, 13, 14, 15 modifiziert werden. Auch durch eine Änderung der geometrischen Ausmaße der Kernteile 7, 11 mit dreieckigem Querschnitt können die Common Mode Induktivität und die Differential Mode Induktivität in gewünschter Weise modifiziert werden. Dementsprechend erlaubt der hier beschriebene Kern 4 eine hohe Designfreiheit, bei der durch eine Veränderung der genauen Geometrie des Kerns 4 die Common Mode Induktivität und die Differential Mode Induktivität an die jeweilige Anwendung angepasst werden können.

Die hier beschriebene Speicherdrossel stellt somit eine Kombination einer Common Mode Drossel (common mode choke) und einer Differential Mode Drossel (differential mode choke) dar. Durch diese Kombination kann die Speicherdrossel dazu geeignet sein, zwei separate Bauteile zu ersetzen und auf diese Weise das magnetische Volumen zu reduzieren.

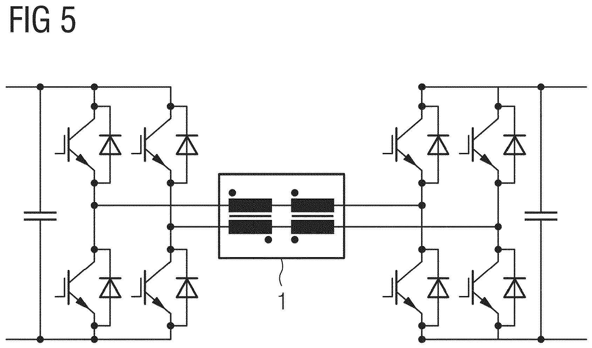

Figur 5 zeigt ein Schaltbild für einen mehrphasigen Gleichspannungswandler, der die hier beschriebene Speicherdrossel 1 aufweist.

### Bezugszeichen

- 1: Speicherdrossel
- 2: Spule
- 3, 3a, 3b: stabförmiger Kern
- 4: Kern
- 5: erster Bereich
- 6: zweiter Bereich
- 7: Kernteil
- 8: erste Seitenfläche
- 9: zweite Seitenfläche
- 10: dritte Seitenfläche
- 11: äußerer Kernteil
- 12: erste innere Platte
- 13: zweite innere Platte
- 14: erste äußere Platte
- 15: zweite äußere Platte
- 16: Spalt
- 17: Common-Mode-Pfad
- 18: Differential-Mode-Pfad
- 19: Öffnung

## Patentansprüche

1. Speicherdrossel (1) für einen mehrphasigen Gleichspannungswandler,
aufweisend zumindest zwei Spulen (2) und einen Kern (4), über den die Spulen (2) miteinander gekoppelt sind,
wobei der Kern (4) einen ersten Bereich (5), der ein erstes Material aufweist, und einen zweiten Bereich (6) aufweist, der ein zweites Material aufweist, das vom ersten Material verschieden ist, wobei das erste Material und das zweite Material magnetisch sind,
wobei der erste Bereich (5) stabförmige Kerne (3) und innere Platten (12) aufweist, wobei jede Spule (2) um einen entsprechenden der stabförmigen Kerne (3) gewickelt ist, wobei die stabförmigen Kerne (3) zwischen den inneren Platten (12) angeordnet sind und an den inneren Platten (12) unmittelbar anliegen, und
wobei der zweite Bereich (6) äußere Platten (14) aufweist, die auf der von den stabförmigen Kernen (3) wegweisenden Seiten der inneren Platten (12) angeordnet sind und die parallel zu den inneren Platte (12) angeordnet sind.

2. Speicherdrossel (1) gemäß dem vorherigen Anspruch,
wobei das erste Material eine höhere Sättigungsmagnetisierung aufweist als das zweite Material.

3. Speicherdrossel (1) gemäß einem der vorherigen Ansprüche, wobei für das erste Material eine magnetische Sättigung erst bei magnetischen Flussdichten von mehr als einem Tesla eintritt.

4. Speicherdrossel (1) gemäß einem der vorherigen Ansprüche, wobei das erste Material eine geringere magnetische Permeabilität aufweist als das zweite Material.

5. Speicherdrossel (1) gemäß dem vorherigen Anspruch, wobei die inneren Platten (12) und die äußeren Platten (14) durch einen Spalt (16) voneinander getrennt sind.

6. Speicherdrossel (1) gemäß einem der vorherigen Ansprüche, wobei der erste Bereich (5) zumindest einen Kernteil (7) aufweist, der derart zwischen zwei der genannten Spulen (2) angeordnet ist, dass eine erste Seitenfläche (8) des zumindest einen Kernteils (7) zu einer der beiden Spulen (2) weist und eine zweite Seitenfläche (9) des zumindest einen Kernteils (7) zu einer anderen der beiden Spulen (2) weist.

7. Speicherdrossel (1) gemäß dem vorherigen Anspruch, wobei der zumindest eine Kernteil (7) einen dreieckigen Querschnitt aufweist.

8. Speicherdrossel (1) gemäß einem der Ansprüche 6 oder 7, wobei der erste Bereich (5) mehrere Kernteile (7) aufweist und zwischen den mehreren Kernteilen (7) jeweils eine Öffnung (19) angeordnet ist.

9. Speicherdrossel (1) gemäß einem der vorherigen Ansprüche, wobei es sich bei dem ersten Material um einen gepressten Eisenpulverkern handelt.

10. Speicherdrossel (1) gemäß einem der vorherigen Ansprüche, wobei es sich bei dem zweiten Material um ein gesintertes Material, beispielsweise MnZn-Ferrit, handelt.

11. Mehrphasiger Gleichspannungswandler aufweisend eine Speicherdrossel (1) gemäß einem der vorherigen Ansprüche.

## Claims

1. Storage choke (1) for a multiphase DC/DC converter, comprising at least two coils (2) and a core (4), by means of which the coils (2) are coupled to one another,
wherein the core (4) comprises a first region (5), which comprises a first material, and a second region (6), which comprises a second material that is different from the first material, the first material and the second material being magnetic,
wherein the first region (5) comprises rod-shaped cores (3) and inner plates (12), each coil (2) being wound around a corresponding one of the rod-shaped cores (3), the rod-shaped cores (3) being arranged between the inner plates (12) and bearing directly on the inner plates (12), and
wherein the second region (6) comprises outer plates (14), which are arranged on the sides of the inner plates (12) facing away from the rod-shaped cores (3) and are arranged parallel to the inner plates (12) .

2. Storage choke (1) according to the preceding claim, wherein the first material has a higher saturation magnetization than the second material.

3. Storage choke (1) according to one of the preceding claims, wherein, for the first material, a magnetic saturation does not occur until there are magnetic flux densities of more than one tesla.

4. Storage choke (1) according to one of the preceding claims, wherein the first material has a lower magnetic permeability than the second material.

5. Storage choke (1) according to the preceding claim, wherein the inner plates (12) and the outer plates (14) are separated from one another by a gap (16).

6. Storage choke (1) according to one of the preceding claims, wherein the first region (5) comprises at least one core part (7), which is arranged between two of said coils (2) in such a way that a first side surface (8) of the at least one core part (7) faces towards one of the two coils (2) and a second side surface (9) of the at least one core part (7) faces towards another of the two coils (2).

7. Storage choke (1) according to the preceding claim, wherein the at least one core part (7) has a triangular cross section.

8. Storage choke (1) according to one of Claims 6 and 7,
wherein the first region (5) comprises a plurality of core parts (7), and an opening (19) is respectively arranged between the plurality of core parts (7).

9. Storage choke (1) according to one of the preceding claims, wherein the first material is a compressed iron powder core.

10. Storage choke (1) according to one of the preceding claims, wherein the second material is a sintered material, for example MnZn ferrite.

11. Multiphase DC/DC converter comprising a storage choke (1) according to one of the preceding claims.

## Revendications

1. Inductance d'accumulation (1) destinée à un convertisseur de tension continue polyphasé, ladite inductance comportant au moins deux bobines (2) et un noyau (4) permettant de coupler les bobines (2) entre elles, le noyau (4) comportant une première région (5), qui possède un premier matériau, et une deuxième région (6) qui possède un deuxième matériau différent du premier matériau, le premier matériau et le deuxième matériau étant magnétiques, la première région (5) comportant des noyaux (3) en forme de tige et des plaques intérieures (12), chaque bobine (2) étant enroulée autour d'un noyau correspondant parmi les noyaux (3) en forme de tige, les noyaux (3) en forme de tige étant disposés entre les plaques intérieures (12) et venant en appui directement sur les plaques intérieures (12), et la deuxième région (6) comportant des plaques extérieures (14) qui sont disposées sur les côtés des plaques intérieures (12) qui sont opposés aux noyaux (3) en forme de tige et qui sont disposées parallèlement à la plaque intérieure (12).

2. Inductance d'accumulation (1) selon la revendication précédente, le premier matériau présentant une magnétisation de saturation supérieure à celle du deuxième matériau.

3. Inductance d'accumulation (1) selon l'une des revendications précédentes, la saturation magnétique du premier matériau ne se produisant qu'à des densités de flux magnétique supérieures à un Tesla.

4. Inductance d'accumulation (1) selon l'une des revendications précédentes, le premier matériau présentant une perméabilité magnétique inférieure à celle du deuxième matériau.

5. Inductance d'accumulation (1) selon la revendication précédente, les plaques intérieures (12) et les plaques extérieures (14) étant séparées les unes des autres par un intervalle (16).

6. Inductance d'accumulation (1) selon l'une des revendications précédentes, la première région (5) comportant au moins une partie de noyau (7) qui est disposée entre deux desdites bobines (2) de telle manière qu'une première surface latérale (8) de l'au moins une partie de noyau (7) est dirigée vers l'une des deux bobines (2) et une deuxième surface latérale (9) de l'au moins une partie de noyau (7) est dirigée vers une autre des deux bobines (2).

7. Inductance d'accumulation (1) selon la revendication précédente, l'au moins une partie de noyau (7) ayant une section transversale triangulaire.

8. Inductance d'accumulation (1) selon l'une des revendications 6 ou 7, la première région (5) comportant plusieurs parties de noyau (7) et une ouverture (19) étant disposée entre les plusieurs parties de noyau (7).

9. Inductance d'accumulation (1) selon l'une des revendications précédentes, le premier matériau étant un noyau de poudre de fer pressé.

10. Inductance d'accumulation (1) selon l'une des revendications précédentes, le deuxième matériau étant un matériau fritté, par exemple de la ferrite MnZn.

11. Convertisseur de tension continue polyphasé comportant une inductance d'accumulation (1) selon l'une des revendications précédentes.
